# EUROPÄISCHE PATENTSCHRIFT

(11) **EP 3 776 134 B1**
(45) Veröffentlichungstag und Bekanntmachung des Hinweises auf die Patenterteilung: **25.09.2024**
(21) Anmeldenummer: 19723705.0
(22) Anmeldetag: 02.05.2019
(51) Int. Cl.: G05F 1/38, G05F 1/70, H02J 3/18, H01F 29/14

(54) **MAGNETISCH REGELBARE DROSSEL ZUR BLINDLEISTUNGSKOMPENSATION MIT KAPAZITIV BESCHALTETEN ZUSATZWICKLUNGEN**
MAGNETICALLY CONTROLLABLE CHOKE FOR REACTIVE POWER COMPENSATION HAVING CAPACITIVELY CONNECTED AUXILIARY WINDINGS
BOBINE D'INDUCTION À RÉGLAGE MAGNÉTIQUE POUR LA COMPENSATION DE PUISSANCE RÉACTIVE AVEC ENROULEMENTS AUXILIAIRES CONNECTÉS DE MANIÈRE CAPACITIVE

(30) Priorität: 30.05.2018 DE 102018208626
(43) Veröffentlichungstag der Anmeldung: 17.02.2021
(73) Patentinhaber: Siemens Energy Global GmbH & Co. KG, 81739 München (DE)
(72) Erfinder: BITTER, Oliver, 430056 Wuhan (CN); FRITSCHE, Ronny, 90469 Nürnberg (DE); HAMMER, Thomas, 91126 Schwabach (DE); KÜSTERMANN, Matthias, 90408 Nürnberg (DE); MANTHE, Thomas, 17373 Ueckermünde (DE); MORGENSTERN, Ralph, 91052 Erlangen (DE); PILZ, Georg, 91099 Poxdorf (DE)
(86) Internationale Anmeldenummer: PCT/EP2019/061189
(87) Internationale Veröffentlichungsnummer: WO 2019/228743

(56) Entgegenhaltungen:
- EP-A1- 3 168 708
- DE-A1- 2 318 952
- SU-A1- 1 101 967

## Beschreibung

Die Erfindung betrifft eine Vorrichtung zur Blindleistungskompensation in einem wenigstens einen Phasenleiter aufweisenden Hochspannungsnetz mit wenigstens einem Hochspannungsanschluss, der zur Verbindung mit dem Phasenleiter eingerichtet ist, wobei für jeden Hochspannungsanschluss ein erster und ein zweiter Kernabschnitt die Teil eines geschlossenen Magnetkreises sind, eine erste Hochspannungswicklung, die den ersten Kernabschnitt umschließt, und eine zweite Hochspannungswicklung, die den zweiten Kernabschnitt umschließt und parallel zur ersten Hochspannungswicklung geschaltet ist, wenigstens ein Sättigungsschaltzweig, der zum Sättigen der Kernabschnitte eingerichtet ist und ansteuerbare Leistungshalbleiterschalter aufweist, und eine Steuerungseinheit zum Ansteuern der Leistungshalbleiterschalter vorgesehen sind, wobei die erste und die zweite Hochspannungswicklung mit ihrem Hochspannungsende mit dem zugeordneten Hochspannungsanschluss verbunden und an ihrer Niederspannungsseite mit einem oder dem Sättigungsschaltzweig verbindbar sind.

Eine solche Vorrichtung ist aus der EP 3 168 708 A1 bereits bekannt. Dort ist ein so genannter "Full Variable Shunt Reactor" (FVSR) offenbart, der eine Weiterentwicklung eines "Magnetically Controlled Shunt Reactor" (MCSR) dargestellt. Die vorbekannte Vorrichtung verfügt über zwei einander parallel geschaltete Hochspannungswicklungen, die jeweils einen Kernschenkel eines geschlossenen Eisenkerns umschließen und an ihrem Hochspannungsende an einen Phasenleiter eines Hochspannungsnetzes angeschlossen sind. Die Niederspannungsseiten der Hochspannungswicklungen sind mit Hilfe eines Transistorschalters entweder mit einem zweckmäßig polarisierten Umrichter oder direkt mit einem Erdanschluss verbindbar. Der Umrichter ist zum Erzeugen eines Gleichstroms in der mit ihm verbundenen Hochspannungswicklung eingerichtet. Dabei wird der Gleichstrom so eingestellt, dass der von der Wicklung umschlossene Kernschenkel in einen gewünschten Sättigungszustand getrieben wird. In diesem Sättigungszustand weist das Kernmaterial beispielsweise eine sehr kleine magnetische Permeabilität auf, wodurch sich der magnetische Widerstand der Wicklung erhöht und deren Induktivität abgesenkt wird. Die Sättigung der besagten Kernabschnitte ist polarisationsabhängig, so dass ein über die Wicklungen fließender Wechselstrom je nach seiner Polarisierung im Wesentlichen nur über eine der beiden Hochspannungswicklungen fließt. So fließt beispielsweise ein positiver Wechselstrom über die erste Hochspannungswicklung während ein negativer Wechselstrom über die zweite Hochspannungswicklung zur Erde hin abfließt. Wird der Strom nur über eine Hochspannungswicklung getrieben, kann die jeweils andere Wicklung, die gerade nicht vom Wechselstrom durchströmt wird, mit einem Gleichstrom beaufschlagt werden, um den von ihr umschlossenen Kernschenkel in dem gewünschten Maß zu sättigen.

Magnetisch gesteuerte Drosselspulen sind ferner aus der DE 20 2013 004 706 U1 und der DE 10 2012 110 969 bekannt.

Die DE 23 18 952 A1 offenbart eine Vorrichtung, bei der eine Blindleistungsquelle über eine Sekundärwicklung einem Reaktortransformator hinzu geschaltet werden kann.

Die SU 1 101 967 A offenbart einen statischen Blindleistungskompensator mit Reaktor-Transformator.

Der vorbekannten Vorrichtung haftet der Nachteil an, dass diese ausschließlich induktiv wirksame Bauteile aufweist und bei Bedarf keine kapazitive Blindleistung bereitstellen kann.

Aufgabe der Erfindung ist es, eine Vorrichtung der eingangs genannten Art bereitzustellen, die kompakt ist und die gleichzeitig kapazitive Blindleistung bereitstellen kann.

Die Erfindung löst diese Aufgabe durch Zusatzwicklungen, die induktiv mit den Hochspannungswicklungen gekoppelt sind, wobei die Zusatzwicklungen mit wenigstens einem kapazitiv wirkenden Bauteil verschaltet sind, wobei das kapazitiv wirkende Bauteil einen statischen Blindleistungskompensator aufweist, der für jeden Hochspannungsanschluss eine Reihenschaltung aus zweipoligen Submodulen ausbildet, wobei jedes Submodul eine Vollbrückenschaltung aus Leistungshalbleiterschaltern und einem Kondensator ausbildet.

Die erfindungsgemäße Vorrichtung weist neben den Komponenten, die für einen so genannten "Full Variable Shunt Reactors" (FVSR) notwendig sind, Zusatzwicklungen auf, die mit wenigstens einer der Hochspannungswicklungen des FVSR induktiv gekoppelt sind. Dabei sind die Zusatzwicklungen mit einem kapazitiv wirkenden Bauteil verschaltet. Mit dem Begriff "verschaltet" ist gemeint, dass jedes kapazitiv wirkende Bauteil galvanisch entweder direkt oder über ein elektrisches Bauteil, wie beispielsweise eine Schalteinheit mit wenigstens einer der Zusatzwicklungen verbunden ist. Das kapazitive Bauteil, beispielsweise ein Kondensator oder eine mit Kondensatoren ausgerüstete "Flexible AC Transmission System (FACTS)-Komponente, wie beispielsweise ein Static Synchronous Compensator (STATCOM) kann so Einfluss auf den Grad und die Richtung der Blindleistungskompensation nehmen. Dabei kann die Steuerungseinheit die Leistungshalbleiterschalter des FVSR so ansteuern, dass der induktive Effekt der Hochspannungswicklung bei der Blindleistungskompensation nahezu vollständig zurückgefahren wird, so dass lediglich das kapazitive Bauteil seine Wirkung entfaltet und zu einer in Summe kapazitiven Blindleistungskompensation beiträgt. Abweichend hiervon kann der Steuerungseinheit dafür sorgen, dass die induktive Wirkung der Hochspannungswicklungen vollständig zur Geltung kommt, so dass die Wirkung des kapazitiven Bauteils überlagert wird, so dass in Summe eine induktive Blindleistungskompensation erfolgt.

Darüber hinaus ist es im Rahmen der Erfindung jedoch auch möglich, das kapazitiv wirkende Bauteil über eine Schalteinheit mit den Zusatzwicklungen zu verschalten, wobei die besagte Schalteinheit mit einer separaten oder mit der Steuerungseinheit des FVSR verbunden ist, so dass diese das kapazitive Bauteil je nach Wunsch zugeschaltet oder von den Zusatzwicklungen getrennt werden kann.

Als Schalteinheit zum Zu- und Abschalten des kapazitiv wirkenden Bauteils zu den Zusatzwicklungen kommt bevorzugt ein elektronischer Schalter, in der Regel Leistungshalbleiterschalter, wie beispielsweise ein IGBT, ein GTO, ein Thyristor oder dergleichen in Betracht. In diesem Fall umfasst die Schalteinheit bevorzugt zwei entgegensinnig zueinander geschaltete Leistungshalbleiterschalter, so dass ein Schalten von Strömen in beiden Richtungen möglich ist.

Die Verschaltung und die Anzahl der kapazitiv wirkenden Bauteile sind im Rahmen der Erfindung grundsätzlich beliebig.

Bevorzugt weist jedoch jede Zusatzwicklung zwei Teilzusatzwicklungen auf, wobei jede Hochspannungswicklung induktiv mit einer Teilzusatzwicklung gekoppelt ist, und die Teilzusatzwicklungen in Reihe oder parallel zueinander geschaltet sind. Gemäß dieser vorteilhaften Weiterentwicklung sind die Hochspannungswicklungen und die Teilzusatzwicklungen beispielsweise konzentrisch zueinander angeordnet, wobei sie den gleichen Kernabschnitt, beispielsweise einen Kernschenkel, umschließen. Dabei sind die Hochspannungswicklungen und die Teilzusatzwicklungen hohlzylindrisch ausgestaltet, wobei sich der Kernschenkel durch die innere Zusatzwicklung erstreckt, die von der Hochspannungswicklung umschlossen ist.

Gemäß einer bevorzugten Ausgestaltung der Erfindung umfasst das kapazitiv wirkende Bauteil wenigstens einen Kondensator. Der Begriff "Kondensator" soll hier sowohl einen einzigen Kondensator oder aber auch eine Reihenschaltung und/oder Parallelschaltung von mehreren Kondensatoren umfassen, also auch Kondensatorbatterien. Der Kondensator kann in dem Kessel des FVSR angeordnet sein. Abweichend davon ist der Kondensator in einem eigenen separaten Gehäuse angeordnet oder luftisoliert aufgestellt.

Weitere Vorteile bringt es mit sich, wenn die Zusatzwicklungen eine Dreiecksschaltung ausbilden. Bei einer solchen Ausgestaltung der Erfindung ist es zweckmäßig, wenn jeder Zusatzwicklung ein Kondensator parallel geschaltet ist. Besteht jede Zusatzwicklung aus zwei in Reihe geschalteten Teilzusatzwicklungen, ist der Kondensator der Reihenschaltung der Teilzusatzwicklungen parallel geschaltet. Abweichend hiervon ist es jedoch auch möglich, dass der Kondensator ebenfalls zwei Teilkondensatoren aufweist, wobei jeder Teilkondensator einer Teilzusatzwicklung parallel geschaltet ist. In einem Kondensatorzweig, der die Zusatzwicklung oder Teilzusatzwicklung überbrückt, ist bevorzugt eine Schalteinheit angeordnet, die in ihrer geschlossenen Stellung für die Parallelschaltung des Kondensators zu der Zusatzwicklungen sorgt, wobei die Schalteinheit in ihrer Unterbrecherstellung die kapazitive Wirkung des Kondensators aufhebt.

Gemäß einer weiteren Ausgestaltung der Erfindung ist jedes kapazitiv wirkende Bauteil wieder als Kondensator ausgeführt, wobei die Zusatzwicklungen eine Dreiecksschaltung ausbilden und wobei der Potenzialpunkt zwischen zwei Zusatzwicklungen mit einem Pol eines Kondensators verbunden ist. Auch bei dieser Ausführung der Erfindung sind die Zusatzwicklungen, die wieder aus Teilwicklungen bestehen können, in einer Dreiecksschaltung angeordnet. Der Potenzialpunkt zwischen zwei Zusatzwicklungen ist entweder direkt oder über eine Schalteinheit mit einem Pol eines Kondensators verbunden. Der Kondensator ist an seiner von den Zusatzwicklungen abgewandten Seite bevorzugt geerdet. Abweichend davon sind die Kondensatoren an ihrer von den Zusatzwicklungen abgewandten Seiten miteinander verbunden, wobei sie einen so genannten Kondensatorsternpunkt ausbilden. Der Kondensatorsternpunkt kann im Rahmen der Erfindung geerdet sein. Bei einer abweichenden Ausgestaltung ist der Kondensatorsternpunkt ein fliegender und somit nicht geerdeter Kondensatorsternpunkt.

Weiterhin ist es im Rahmen der Erfindung möglich, dass das kapazitiv wirkende Bauteil jeweils als Kondensator ausgebildet ist, wobei die Zusatzwicklungen eine Sternschaltung ausbilden, so dass ein gemeinsamer Zusatzwicklungssternpunkt bereitgestellt ist. Die Zusatzwicklungen sind jeweils an ihrer vom Sternpunkt abgewandten Seite mit einem Pol eines Kondensators verbunden. Abweichend hiervon ist es möglich, dass die einen Zusatzwicklungssternpunkt ausbildenden Zusatzwicklungen an ihrer vom Zusatzwicklungssternpunkt abgewandten Seite miteinander über einen Kondensator verbunden sind. In dem Kondensatorzweig, der zwei Zusatzwicklungen miteinander verbindet, kann wiederum eine Schalteinheit, wie zuvor beschrieben, angeordnet sein.

Gemäß einer weiteren Ausführung der Erfindung dienen die Zusatzwicklungen als Ausgleichswicklungen. Voraussetzung hierfür ist, dass die Zusatzwicklungen eine Dreiecksschaltung ausbilden. Mit einer Dreiecksschaltung ist sichergestellt, dass die beim FVSR-Betrieb auftretenden Oberschwingungen der Netzfrequenz, deren Ordnung ungerade und glatt durch drei teilbar ist, unterdrückt werden. Gemäß dieser Ausführung der Erfindung werden mit anderen Worten ohnehin erforderliche Wicklungen, also die Ausgleichswicklungen dazu eingesetzt, kostengünstig und platzsparend kapazitive Bauteile in den FVSR zu integrieren. Mit anderen Worten ist eine kostengünstige, platzsparende und effektive Vorrichtung bereitgestellt. Die Ausgleichswicklungen unterdrücken z.B. die dritte, neunte und fünfzehnte harmonische Oberschwingung der Netzfrequenz.

Erfindungsgemäß umfasst das kapazitiv wirkende Bauteil wenigstens einen statischen Blindleistungskompensator, der für jeden Hochspannungsanschluss eine Reihenschaltung aus zweipoligen Submodulen aufweist, wobei jedes Submodul eine Vollbrückenschaltung aus Leistungshalbleiterschaltern und einem Kondensator ausbildet. Ein solcher Blindleistungskompensator ist auch als so genannter STATCOM bekannt.

Bei einer Vollbrückenschaltung verfügt das Submodul über einen ersten Reihenschaltungszweig und einen zweiten Reihenschaltungszweig. Die beiden Reihenschaltungszweige sind einem Kondensator des Submoduls jeweils parallel geschaltet. Dabei weist jeder Reihenschaltungszweig eine Reihenschaltung aus Leistungshalbleiterschaltern auf. Der Potenzialpunkt zwischen den Leistungshalbleiterschaltern ist jeweils mit einer Anschlussklemme verbunden. Mit anderen Worten ist der Potenzialpunkt zwischen den Leistungshalbleiterschaltern des ersten Reihenschaltungszweigs mit einer ersten Anschlussklemme des Submoduls und der Potenzialpunkt zwischen den Leistungshalbleiterschaltern des zweiten Reihenschaltungszweigs mit einer zweiten Anschlussklemme des Submoduls verbunden. Bei der Reihenschaltung der Submoduls ist nun wieder die zweite Anschlussklemme des ersten Submoduls mit der ersten Anschlussklemme des zweiten Submoduls verbunden. Die Anzahl der Submodule ist von den jeweils vorliegenden Anforderungen abhängig. Als Leistungshalbleiterschalter kommen hier bevorzugt abschaltbare Leistungshalbleiterschalter und insbesondere so genannte IGBTs in Betracht, denen jeweils eine Freiluftdiode gegensinnig parallel geschaltet ist.

Gemäß einer diesbezüglich zweckmäßigen Weiterentwicklung bilden die Zusatzwicklungen eine Dreiecksschaltung aus, wobei jeder Potenzialpunkt zwischen zwei Zusatzwicklungen mit einer Reihenschaltung aus zweipoligen Submodulen verbunden ist. Auch hier ist es vorteilhaft, wenn die Zusatzwicklungen wieder zwei Teilzusatzwicklungen aufweisen, die bevorzugt in Reihe zueinander geschaltet sind. Dabei ist jede Teilzusatzwicklung wieder mit einer Hochspannungswicklung induktiv gekoppelt, wobei die zuvor gemachten Ausführungen hier entsprechend gelten. Auch hier können die Zusatzwicklungen als Ausgleichswicklungen zum Unterdrücken der durch drei teilbaren harmonischen Oberschwingungen der Netzfrequenz dienen.

Bevorzugt ist wenigstens ein kapazitives Bauteil über eine Schalteinheit mit wenigstens einer Zusatzwicklung verbunden. Wie bereits weiter oben ausgeführt wurde, ist mit Hilfe einer Schaltereinheit, die als elektronischer oder mechanischer Schalter ausgeführt sein kann, die kapazitive Wirkung des kapazitiven Bauteils steuerbar. Ist die Schalteinheit als elektronischer Schalter ausgeführt, kann dieser mit der bereits vorhandenen Steuerungseinheit verbunden sein. Darüber hinaus ist es auch möglich, dass der elektronische Schalter aber auch der mechanische Schalter des kapazitiven Bauteils über eine eigene separate Steuerung ansteuerbar ist.

Gemäß einer bevorzugten Ausgestaltung der Erfindung verfügt die erfindungsgemäße Vorrichtung über einen Kessel, in dem die Hochspannungswicklungen und der geschlossenen Magnetkreis angeordnet sind. Der Kessel ist bevorzugt mit einem Isolierfluid, beispielsweise einer Esterflüssigkeit oder einem mineralischen Öl befüllt, das zum einen die erforderliche Isolierung und zum anderen die notwendige Kühlung für die beim Betrieb auf Hochspannung liegenden Bauteile bereitstellen. Jedes kapazitive Bauteil, beispielsweise jeder Kondensator oder jede statische Blindleistungskompensationseinheit, sind bei einer Variante in dem gleichen Kessel wie die Hochspannungswicklungen des FVSR angeordnet.

Abweichend davon ist das kapazitive Bauteil außerhalb des Kessels des eigentlichen FVSR angeordnet. Das kapazitiv wirkende Bauteil ist mit anderen Worten separat angeordnet. Dabei ist es möglich, dass das kapazitiv wirkende Bauteil in einem zweiten Kessel angeordnet ist, der ebenfalls mit einem Isolierfluid, beispielsweise einem Gas oder einer Flüssigkeit, befüllt ist. In diesem Falle sind Durchführungen erforderlich, um die notwendige elektrische Isolierung zwischen den auf Erdpotenzial liegenden Kesseln oder Gehäusen und den Hochspannungsleitern bereitzustellen, die die Zusatzwicklungen mit jedem kapazitiv wirkenden Bauteil verbinden.

Die Erfindung ist im Anspruch 1 definiert. Die davon abhängigen Ansprüche definieren bevorzugte Ausführungsformen der Erfindung. Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: ein Ausführungsbeispiel der Vorrichtung in einer schematischen Darstellung,
- Figur 2: die Sättigungsschaltzweige der Vorrichtung gemäß Figur 1,
- Figur 3: ein weiteres Ausführungsbeispiel der Vorrichtung,
- Figuren 4 bis 8: Ausführungsbeispiele, welche die Verschaltung von Kondensatoren als kapazitiv wirkendes Bauteil mit den Zusatzwicklungen verdeutlichen,
- Figur 9: ein weiteres Ausführungsbeispiel und
- Figur 10: ein Ausführungsbeispiel der Erfindung in einer schematischen Darstellung zeigen.

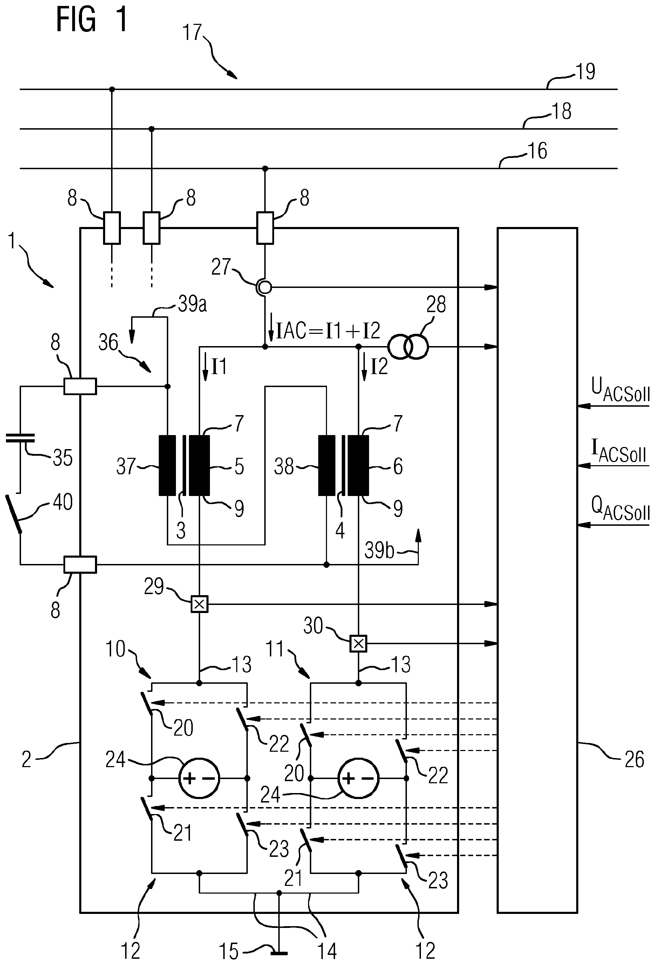

Figur 1 zeigt ein Ausführungsbeispiel der Vorrichtung 1, die einen mit einem Isolierfluid befüllten Kessel 2 aufweist. Als Isolierfluid kommen mineralische Öle, aber auch Esterflüssigkeiten oder dergleichen in Betracht. Das Isolierfluid stellt zum einen die notwendige Spannungsfestigkeit für Bauteile der Vorrichtung 1, die auf einem Hochspannungspotenzial liegen, gegenüber dem Kessel 2 auf Erdpotenzial bereit. Darüber hinaus dient das Isolierfluid zur Kühlung der beim Betrieb Wärme entwickelnden Komponenten.

Innerhalb des Kessels 2 ist ein Kern angeordnet, der aus einem magnetisierbaren Material, hier flächig aneinander anliegenden Eisenblechen, zusammengesetzt ist, und einen ersten Kernschenkel 3 sowie einen zweiten Kernschenkel 4 als Kernabschnitte ausbildet. Der erste Kernschenkel 3 ist von einer ersten Hochspannungswicklung 5 umschlossen. Der zweite Kernschenkel 4 ist von einer zweiten Hochspannungswicklung 6 umgeben. Zur Ausbildung eines geschlossenen Magnet- oder Eisenkreises dienen figürlich nicht dargestellte Joche, die sich von dem oberen Ende des ersten Kernschenkels 3 zum oberen Ende des zweiten Kernschenkels 4 sowie vom unteren Ende des Kernschenkels 3 zum unteren Ende des Kernschenkels 4 erstrecken. In Figur 1 sind die bewickelten Kernschenkel 3 und 4 für eine Phase gezeigt. Für die beiden anderen Phasen des Hochspannungsnetzes sind jeweils 2 weitere bewickelte nicht dargestellte Kernschenkel im dem Kessel 2 angeordnet, die über die Joche miteinander verbunden sind. Darüber hinaus sind zwei figürlich ebenfalls nicht dargestellte Rückflussschenkel vorgesehen, die von keiner Wicklung umschlossen sind und sich rechts und links parallel zu den Kernschenkeln 3 beziehungsweise 4 erstrecken. Mit anderen Worten ist bei der in Figur 1 beschriebenen einphasigen Ausführung des FVSR ein so genannter 6/2-Kern bereitgestellt. Abweichend hiervon kann die Vorrichtung 1 für jede Phase einen Kessel 2 aufweisen. In jedem einphasigen Kessel 2 wäre dann ein 2/2 Kern mit zwei bewickelten Kernschenkeln 3 und 3 sowie 2 nicht bewickelten Rückflussschenkeln angeordnet.

Die erste Hochspannungswicklung 5 und die zweite Hochspannungswicklung 6 weisen jeweils ein Hochspannungsende 7 auf, mit dem diese mit einem Hochspannungsanschluss 8 verbunden sind. Ist die Vorrichtung 1 in einem mit Isolierfluid befüllten Kessel angeordnet, ist der Hochspannungsanschluss 8 beispielsweise als Durchführung ausführt. Die Durchführung durchgreift die Kesselwand und ist an ihrem freien, außerhalb des Kessels angeordneten Ende mit einem Freiluftanschluss ausgerüstet. Der figürlich nicht dargestellte Freiluftanschluss dient zum Anschluss eines luftisolierten Leiters. An ihrem Niederspannungsende 9 sind die erste Hochspannungswicklung 5 und die zweite Hochspannungswicklung 6 jeweils mit einem Sättigungsschaltzweig 10 beziehungsweise 11 verbunden, wobei jeder Sättigungsschaltzweig 10, 11 ein zweipoliges Submodul 12 aufweist, das mit einer ersten Anschlussklemme 13 mit der jeweiligen Hochspannungswicklung 5 beziehungsweise 6 und mit einer zweiten Anschlussklemme 14 mit einem gemeinsamen Potenzialpunkt 15 verbunden ist. Der Potenzialpunkt 15 ist in dem gezeigten Ausführungsbeispiel geerdet. Mit anderen Worten sind die Hochspannungswicklungen 5 und 6 einander parallel geschaltet oder zumindest schaltbar.

Über den Hochspannungsanschluss 8 sind die Hochspannungswicklungen 5 und 6 mit einem Phasenleiter 16 eines Hochspannungsnetzes 17 verbunden, wobei das Hochspannungsnetz 17 zwei weitere Phasenleiter 18 und 19 aufweist, die jeweils wieder über einen Hochspannungsanschluss 8 mit zwei Hochspannungswicklungen und zwei Sättigungsschaltzweigen verbunden sind. Mit anderen Worten weist die Vorrichtung 1 für jede Phase 16, 18, 19 des Hochspannungsnetzes 17 einen identischen Aufbau auf, wobei hier aus Gründen der Übersicht lediglich der Aufbau für einen Phasenleiter 16 gezeigt ist.

Wesentlich für den hier gezeigten Full Variable Shunt Reactor (FVSR) ist, dass jeder Sättigungsschaltzweig 10 beziehungsweise 11, ein zweipoliges Submodul 12 aufweist, das über eine Brückenschaltung aus Leistungshalbleiterschaltern 20, 21, 22 und 23 und eine Gleichspannungsquelle 24 verfügt, die bevorzugt unipolar ausgebildet ist und somit einen festen Plus- und einen festen Minuspol aufweist.

Die Brückenschaltung kann im Rahmen der Erfindung eine Halbrücke oder eine Vollbrücke sein. In Figur 1 verfügt jedes Submodul über eine Vollbrücke mit vier Leistungshalbleiterschaltern 20, 21, 22, 23. Eine Halbbrücke umfasst lediglich zwei Leistungshalbleiterschalter. Zum zweckmäßigen Ansteuern der vier Leistungshalbleiterschalter 20, 21, 22 und 23 ist eine Steuerungseinheit 26 vorgesehen, die eingangsseitig mit Sollwerten für die Spannung UACₛₒₗₗ, den Wechselstrom IACₛₒₗₗ und die Blindleistung QACₛₒₗₗ versorgt werden kann. Zum Erfassen des von dem Phasenleiter 16 zu den Hochspannungswicklungen 5 und 6 fließenden Wechselstromes IAC dient ein Stromsensor 27, wobei ein Spannungssensor 28 die hochspannungsseitig der Hochspannungswicklung 5 und 6 abfallende Spannung erfasst. Der Stromsensor 27 und der Spannungssensor 28 sind über figürlich nicht dargestellte Signalleitungen mit der Steuerungseinheit 26 verbunden. An der Niederspannungsseite 9 der Hochspannungswicklung 5 beziehungsweise 6 sind ebenfalls Sensoren 29 und 30 erkennbar, die ebenfalls über Signalleitungen mit der Steuerungseinheit 26 verbunden sind und Ströme erfassen, die zwischen dem jeweiligen Submodul 12 und der jeweiligen Hochspannungswicklung 5 beziehungsweise 6 fließen.

Die Leistungshalbleiterschalter 20, 21, 22 und 23 eines Submoduls 12 können durch zweckmäßige Ansteuersignale, die durch gestrichelte Linien dargestellt sind, von der Steuerungseinheit 26 von einer Trennstellung, in welcher ein Stromfluss über die Leistungshalbleiterschalter unterbrochen ist, in eine Durchgangsstellung, in der ein Stromfluss über die Leistungshalbleiterschalter ermöglicht ist, überführt werden oder umgekehrt von der Durchgangsstellung in die Trennstellung.

Die Betriebsweise der Vorrichtung 1 ist wie folgt: Ist der vom Stromsensor 27 bzw. 28 oder 29 erfasste Strom positiv, sind die Leistungshalbleiterschalter 22 und 23 des Sättigungsschaltkreises 10 geschlossen. Es sei an dieser Stelle vorausgesetzt, dass der Kernschenkel 3 zuvor durch einen von dem Submodul 12 des ersten Sättigungsschaltzweiges zur Hochspannungswicklung 5 fließenden Gleichstrom gesättigt wurde, so dass für die positiven Halbwelle der Wechselspannung der Wechselwiderstand der Hochspannungswicklung 5 kleiner ist als der Wechselwiderstand der Hochspannungswicklung 6. Somit fließt nahezu der gesamte Wechselstrom IAC über den mit I1 bezeichneten Strompfad zur Erde hin ab. In der positiven Halbwelle des Stromes werden daher die Leistungshalbleiterschalter 21 und 22 geschlossen, so dass die Gleichspannungsquelle 24 des Sättigungsschaltkreises 11 einen Gleichstrom treibt, der von der Hochspannungswicklung 6 zur Erde 15 fließt. Während der positiven Halbwelle der Wechselspannung im Phasenleiter 16 kann somit der zweite Kernschenkel 4 in der gewünschten Weise gesättigt werden.

Während der negativen Halbwelle, in welcher der vom Sensor 27 oder 30 gemessene Strom negativ ist, fließt der Wechselstrom IAC hingegen im Wesentlichen über die zweite Hochspannungswicklung 6, so dass durch Schließen der Leistungshalbleiterschalter 20 und 23 und Öffnen der Leistungshalbleiterschalter 21 und 22 des Submoduls 12 des ersten Sättigungsschaltzweiges 10 ein Sättigungsgleichstrom erzeugt wird, der von dem Submodul 12 zur ersten Hochspannungswicklung 5 fließt. Durch Schließen von der Leistungshalbleiterschalter 22 und 21 fließt alternativ ein Strom in umgekehrte Richtung. Durch geeignete Schaltung kann die gewünschte Sättigung des Kernschenkels 3 eingestellt werden.

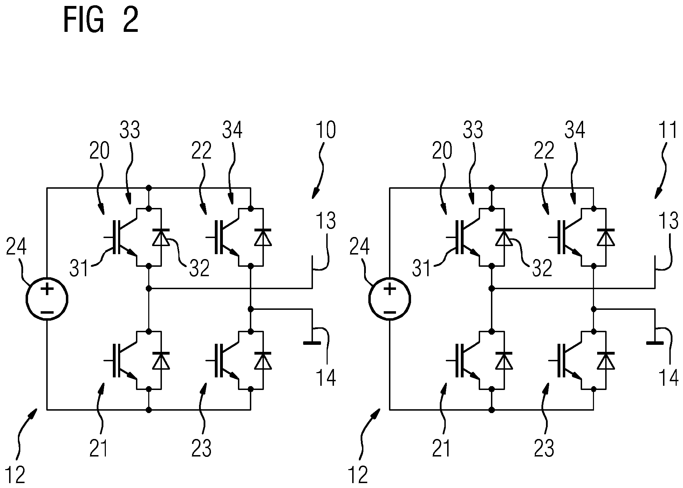

Figur 2 zeigt den Aufbau der Submodule 12 des ersten und zweiten Sättigungsschaltkreises 10, 11 genauer. Es ist erkennbar, dass die Submodule für beide Sättigungsschaltzweige 10 beziehungsweise 11 identisch aufgebaut sind. Es ist ferner erkennbar, dass die Leistungshalbleiterschalter 20, 21, 22, 23 einen so genannten IGBT 31 umfassen, dem eine Freilaufdiode 32 gegensinnig parallel geschaltet ist. Der Aufbau eines IGBTs mit Freilaufdiode ist grundsätzlich bekannt, so dass an dieser Stelle auf deren Wirkungsweise nicht genauer eingegangen zu werden braucht. Wesentlich ist, dass die Freiluftdiode 22 zum Schutz des IGBTs vor Überspannungen in Rückwärtsrichtung dient. Dabei sind IGBT 31 und Diode 32 in der Regel in einem gemeinsamen Schaltergehäuse untergebracht. IGBT 31 und Freilaufdiode 32 werden hier gemeinsam als Leistungshalbleiter bezeichnet.

Jedes Modul 12 ist als so genannte Vollbrücke ausgeführt und umfasst einen ersten Reihenschaltungszweig 33 und einen zweiten Reihenschaltungszweig 34 aus jeweils zwei in Reihe geschalteten Leistungshalbleiterschaltern 20, 21 beziehungsweise 22 und 23. Der Potenzialpunkt zwischen den Leistungshalbleiterschaltern 20, 21 des ersten Reihenschaltungszweiges 33 ist mit der ersten Anschlussklemme 13 und der Potenzialpunkt zwischen den Leistungshalbleiterschaltern 22 und 23 des zweiten Reihenschaltungszweiges 34 ist mit der Anschlussklemme 14 des Submoduls 12 verbunden.

Bislang wurde lediglich die Wirkungsweise der Vorrichtung 1, die in Figur 1 gezeigt ist, als "Full Variable Shunt Reactor" (FVSR) verdeutlicht. Darüber hinaus verfügt wie die in Figur 1 gezeigte Vorrichtung auch über ein kapazitiv wirkendes Bauteil, das in Figur 1 als Kondensator 35 ausgeführt ist. Der Kondensator ist einer Zusatzwicklung 36 parallel geschaltet, wobei die Zusatzwicklung aus zwei Teilzusatzwicklungen 37 und 38 besteht, die zueinander in Reihe geschaltet sind. Die Teilzusatzwicklung 37 ist induktiv mit der ersten Hochspannungswicklung 5 und die zweite Teilzusatzwicklung 38 mit der zweiten Hochspannungswicklung 6 induktiv gekoppelt. Dabei sind die Hochspannungswicklungen 5 bzw. 6 und die jeweilige Teilzusatzwicklung 37 bzw. 38 konzentrisch zueinander angeordnet, wobei sie den gleichen Kernabschnitt 3 bzw. 4 des ansonsten nicht weiter verdeutlichten Kerns umschließen.

In Figur 1 ist lediglich eine Zusatzwicklung 36 für die dort gezeigte Phase verdeutlicht. In dem Kessel 2 sind jedoch für die anderen Phasen weitere Zusatzwicklungen vorgesehen, die identisch aufgebaut und auf gleiche Art und Weise mit dem Kondensator 35 verschaltet sind. Dabei sind die Zusatzwicklungen 36 der unterschiedlichen Phasen miteinander in einer Dreiecksschaltung verbunden. Diese Dreiecksschaltung ist durch die Pfeile 39a bzw. 39b angedeutet. In dem Parallelzweig der Zusatzwicklung, in welcher der Kondensator 35 angeordnet ist, ist ferner ein Schalter 40 schematisch dargestellt, der in dem gezeigten Ausführungsbeispiel zwei gegensinnig parallel geschaltete Thyristoren umfasst. Mit Hilfe des elektronischen Schalters 40 kann der Kondensator 35 der Zusatzwicklung 36 parallel geschaltet oder die Wirkung des kapazitiv wirkenden Bauteils 35 unterdrückt werden.

Der Kondensator 35 ist in Figur 1 als einzelner Kondensator dargestellt, der außerhalb des Tanks des FVSR angeordnet ist. Der Kondensator umfasst jedoch eine Anzahl von in Reihe oder parallel zueinander angeordneten Kondensatoren und kann daher auch als Kondensatorbatterie bezeichnet werden. Dabei ist die Anzahl der parallel oder in Reihe geschalteten Kondensatoren von den jeweiligen Anforderungen abhängig, wobei die kapazitive Wirkung erhöht oder herabgesetzt werden kann.

Der Kondensator oder mit anderen Worten die Kondensatorbatterie 35 ist wie der Schalter außerhalb des Tanks 2 des FVSR angeordnet. Um eine elektrische Verbindung zwischen der Zusatzwicklung 36, die in dem Kessel 2 angeordnet ist, zu ermöglichen, sind wieder zweckmäßige Durchführungen 8 vorgesehen, die ein spannungsfestes Hindurchführen der Hochspannungsleitung durch die Kesselwand auf Erdpotenzial ermöglicht.

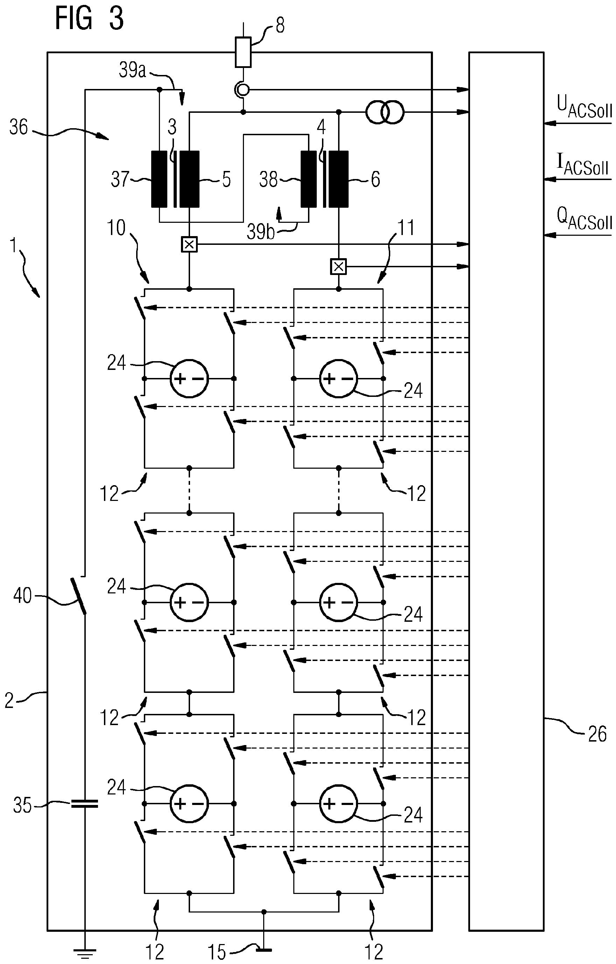

Figur 3 zeigt ein weiteres Ausführungsbeispiel der Vorrichtung 1, wobei aus Gründen der Übersicht lediglich Bauteile zur Verbindung mit einer Phase des Hochspannungsnetzes 17 gezeigt sind. In dem gezeigten Ausführungsbeispiel umfasst jeder Sättigungszweig 10 bzw. 11 eine Reihenschaltung aus mehreren Submodulen 12, die von der Steuerungseinheit 26 entweder alle identisch oder unterschiedlich angesteuert werden, so dass die Gleichspannung zum Erzeugen der Sättigung der Kernschenkel 3, 4 dienenden Gleichstroms den jeweiligen Anforderungen entsprechend skalierbar ist. Die Zusatzwicklung 36 umfasst wieder 2 Teilzusatzwicklungen 37 und 38, die miteinander in Reihe geschaltet sind, wobei die gezeigte Zusatzwicklung 36 wie durch die Pfeile 39a und 39b angedeutet, mit denen Zusatzwicklungen der anderen Phasen eine Dreiecksschaltung ausbildet. Mit anderen Worten ist die Teilzusatzwicklung 37 an ihrem Ende 39a mit einer Teilzusatzwicklung einer hier in Figur 3 nicht gezeigten zweiten Phase verbunden. Entsprechendes gilt für die Teilzusatzwicklung 38, die an ihrem Ende 39b mit einer Teilzusatzwicklung einer anderen Phase verbunden ist, die in Figur 3 nicht gezeigt ist. Der Potenzialpunkt zwischen zwei Zusatzwicklungen 36 unterschiedlicher Phase ist über den Schalter 40 wieder mit einem Pol eines Kondensators 35 bzw. einer Kondensatorbatterie verbunden, wobei jeder Kondensator 35 an seiner vom von der Ausgleichswicklung 36 und dem Schalter 40 abgewandten Seite mit dem Erdpotenzial 15 verbunden ist. Dabei sind der Kondensator 35 sowie der Schalter 40 innerhalb des Tanks 2 der Vorrichtung 1 angeordnet. Auf diese Art und Weise ist ein besonders platzsparende Vorrichtung 1 bereitgestellt. Darüber hinaus ist der Aufwand Hochspannungsleitungen aus dem Tank 2 herauszuführen gegen über dem in Figur 1 gezeigten Ausführungsbeispiel vermieden.

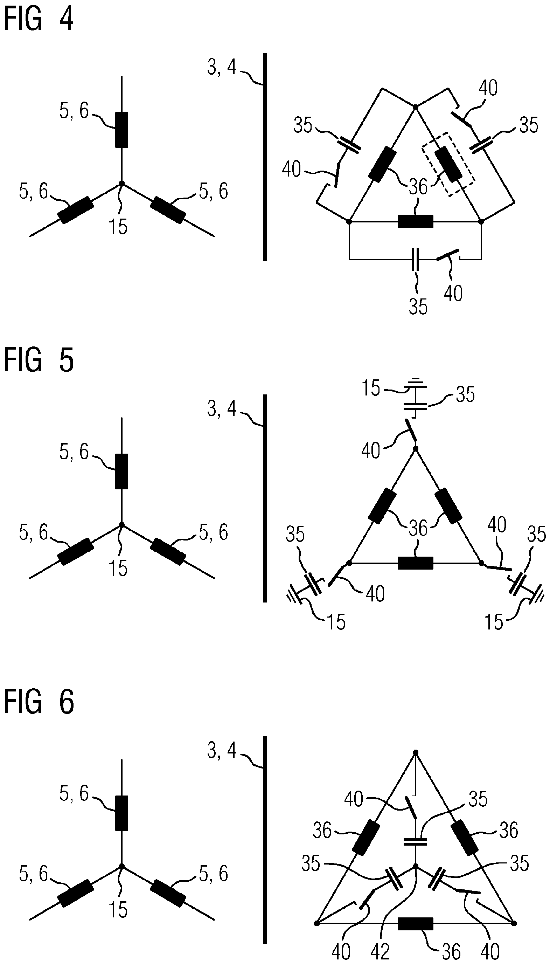

Die Figuren 4, 5, 6, 7 und 8 verdeutlichen unterschiedliche Verschaltungen zwischen dem als Kondensator ausgeführten induktiv wirkenden Bauteil und den Zusatzwicklungen, wobei die parallel geschalteten Hochspannungswicklungen 5 und 6 aus Gründen der Übersichtlichkeit als eine einzige Wicklung verdeutlicht sind. Die Hochspannungswicklungen 5 und 6 bilden mit den Hochspannungswicklungen der anderen Phase einen gemeinsamen Sternpunkt 15 aus, der auch in den Figuren 1 und 3 gezeigt ist. Der gemeinsame Sternpunkt 15 ist geerdet. An ihrer von dem Sternpunkt 15 abgewandten Seite sind die Hochspannungswicklungen 5, 6 mit jeweils einer Phasen 16, 18 oder 19 des Hochspannungsnetzes 17 verbindbar. Die Kernschenkel 3, 4 sind beide gemeinsam als senkrechter Strich verdeutlicht. Wesentlich ist, dass die Hochspannungswicklungen 5, 6 über die Kernschenkel 3, 4 den Zusatzwicklungen 36 der verschiedenen Phasen der Vorrichtung 1 induktiv gekoppelt sind.

In Figur 4 ist erkennbar, dass das als Kondensator 35 oder als Kondensatorbatterie 35 ausgestaltete induktiv wirkende Bauteil 35 jeder Ausgleichswicklung 36 der jeweiligen Phase parallel geschaltet ist. Insofern entspricht Figur 4 der in Figur 1 gezeigten Ausgestaltung der Vorrichtung 1.

Figur 5 verdeutlicht wieder eine Dreiecksschaltung der Zusatzwicklungen 36 der einzelnen Phasen der Vorrichtung 1, wobei im Gegensatz zu dem in Figur 4 gezeigten Ausführungsbeispiel jeder Potenzialpunkt zwischen zwei Zusatzwicklungen 36 unterschiedlicher Phase mit einem Pol eines Kondensators 35 verbunden ist, wobei der Kondensator an seiner von den Zusatzwicklungen 36 abgewandten Seite über einen Erdanschluss 15 geerdet ist. Zwischen den Zusatzwicklungen 36 und jedem Kondensator 35 ist wiederum ein Leistungshalbleiterschalter 40 geschaltet, von dem in Figur 5 lediglich einer gezeigt ist. Insofern entspricht die in Figur 5 dargestellte Anordnung dem in Figur 3 dargestellten Ausführungsbeispiel der Erfindung.

Figur 6 zeigt ein weiteres Ausführungsbeispiel der Verschaltung zwischen den induktiv wirkenden Bauteil 35 und den Zusatzwicklungen 36. Auch hier sind die Zusatzwicklungen 36 unterschiedlicher Phase wieder in einer Dreiecksschaltung miteinander verbunden, wobei auch hier an jedem Potenzialpunkt zwischen den Zusatzwicklungen 36 der verschiedenen Phasen ein Kondensator angeschlossen ist, der an seiner von den Zusatzwicklungen abgewandten Seite jedoch einen Kondensatorsternpunkt 42 ausbildet. Insofern entspricht die Darstellung gemäß Figur 6 der Darstellung gemäß Figur 5, wobei jedoch der Kondensatorsternpunkt 42 in Figur 6 nicht geerdet ist. Hier kann auch wieder ein Schalter eingesetzt werden.

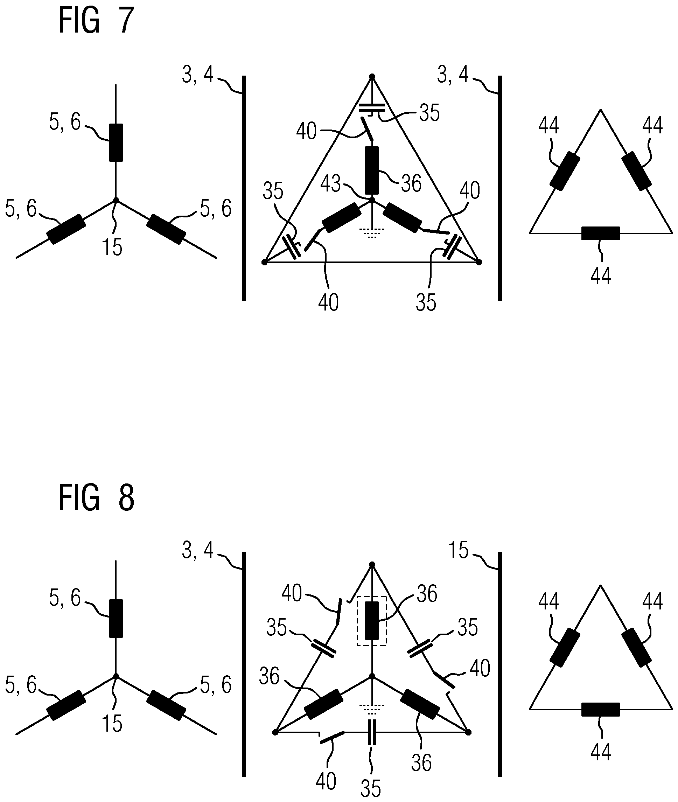

Bei dem in Figur 7 gezeigten Ausführungsbeispiel sind die Zusatzwicklungen 36 der unterschiedlichen Phasen der Vorrichtung 1 in einer Sternpunktschaltung angeordnet, so dass ein Zusatzwicklungssternpunkt 43 ausgebildet ist. An ihrem von dem Zusatzwicklungssternpunkt 43 abgewandten Ende ist jede Zusatzwicklung 36 über einen Schalter 40 wieder mit einem Pol eines Kondensators 35 verbunden. Dabei sind die Kondensatoren 35 der jeweiligen Phasen an ihrer von den Zusatzwicklungen 36 abgewandten Seite untereinander verbunden, so dass die Kondensatoren 35 in einer Dreiecksschaltung miteinander verbunden sind. Wie bereits weiter oben ausführt wurde, ist bei einer Dreiecksschaltung der Zusatzwicklungen 36 eine Unterdrückung der durch drei teilbaren ungeraden harmonischen Oberschwingungen der Netzfrequenz (Strom) mit Hilfe der Zusatzwicklungen möglich. Aus diesem Grund ist für jede Phase der Vorrichtung 1 eine zusätzliche Ausgleichswicklung 44 vorgesehen, wobei die Ausgleichswicklungen unterschiedlicher Phasen ebenfalls in einer Dreiecksschaltung miteinander verbunden sind. Die Ausgleichswicklungen 44 sind über den durch die Bezugszeichen 3 und 4 verdeutlichten Kernabschnitt, der Teil eines geschlossenen Magnetkreises ist, induktiv mit den Hochspannungswicklungen 5 und 6 und mit den Zusatzwicklungen 36 gekoppelt.

Figur 8 entspricht weitestgehend dem in Figur 7 gezeigten Ausführungsbeispiel, wobei jedoch die in einer Sternschaltung miteinander verbundenen Zusatzwicklungen 36 an ihrem vom Zusatzwicklungssternpunkt 43 abgewandten Ende wieder über Kondensatoren 35 miteinander verbunden sind. Mit anderen Worten bilden die Kondensatoren 35 eine Dreiecksschaltung aus, wobei der Potenzialpunkt zwischen zwei Kondensatoren unterschiedlicher Phasen über eine Zusatzwicklung 36 mit dem Zusatzwicklungssternpunkt verbunden ist. Weiterhin ist zwischen jedem Kondensator 35 und einer Zusatzwicklung 36 eine Schalteinheit 40 vorgesehen. Wie in Figur 7 sind auch in dem in Figur 8 verdeutlichten Ausführungsbeispiel Ausgleichswicklungen 44 für jede Phase der Vorrichtung 1 vorgesehen, wobei die drei Ausgleichswicklungen 44 miteinander eine Dreiecksschaltung ausbilden, so dass die harmonischen Oberschwingungen der Netzfrequenz durch die Ausgleichswicklungen unterdrückt werden können.

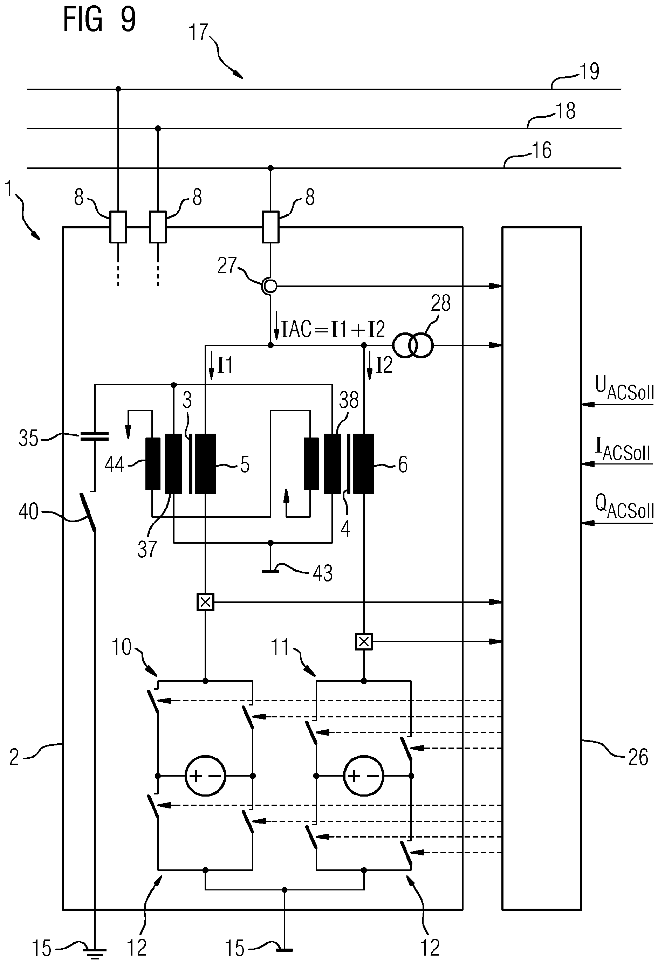

Figur 9 verdeutlicht ein weiteres Ausführungsbeispiel der Vorrichtung 1, wobei jede Zusatzwicklung 36 einer Phase aus zwei Teilzusatzwicklungen 37 und 38 besteht, die einander parallel geschaltet sind. Die Parallelschaltung der Teilzusatzwicklungen 37 und 38 ist an einer Seite mit einem Zusatzwicklungssternpunkt 43 verbunden und an ihrem vom Zusatzwicklungssternpunkt abgewandten Ende mit einem als Kondensator 35 ausgeführten kapazitiv wirkenden Bauteil. Der Kondensator ist über einen Schalter 40 mit dem Erdpotenzial 15 verbindbar. Schalter 40 und Kondensator 35 sind innerhalb eines mit Isolierfluid, hier einem mineralischen Öl befüllten Tank, angeordnet. Darüber hinaus sind Ausgleichswicklungen 44 erkennbar, die ebenfalls aus zwei Teilausgleichswicklungen bestehen, die in Reihe zueinander geschaltet sind. Dabei sind die Ausgleichswicklung, die Teilzusatzwicklung und die Hochspannungswicklung 5 bzw. 6 jeweils konzentrisch zueinander angeordnet und umgeben dabei einen gemeinsamen Kernschenkel 3 bzw. 4.

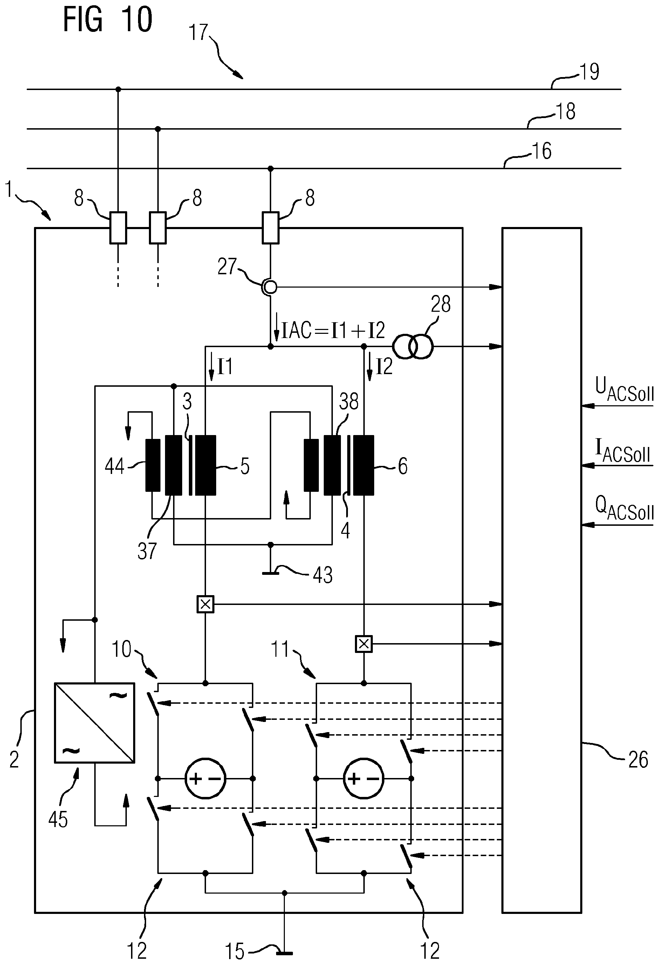

Das in Figur 10 gezeigte Ausführungsbeispiel entspricht dem in Figur 9 gezeigten Ausführungsbeispiel im Hinblick auf die Anordnung von Ausgleichswicklung 44, Teilzusatzwicklung 37 bzw. 38 sowie der Hochspannungswicklung 5 bzw. 6. Die Ausgleichswicklungen 44 sind mit den nicht gezeigten Ausgleichswicklungen der anderen Phasen zu einer Dreiecksschaltung verbunden. Das induktiv wirkende Bauteil ist in der in Figur 10 gezeigten Ausführungsbeispiel jedoch als so genannter STATCOM 45 ausgeführt, wobei der STATCOM eine Reihenschaltung aus zweipoligen Submodulen aufweist, die in ihrem Aufbau den Submodulen 12 in Figur 2 entsprechen, wobei als Gleichspannungsquelle 24 ein unipolarer Kondensator vorgesehen ist. Mit Hilfe der Vollbrückenschaltung kann an den Anschlussklemmen 13 und 14 der Submodule des STATCOM 45, also die an dem Gleichspannungskondensator 24 abfallende Spannung, eine Nullspannung oder die inverse Kondensatorspannung, erzeugt werden. Der Aufbau eines statischen Blindleistungskompensators STATCOM ist jedoch grundsätzlich bekannt, so dass auf genauere Ausführungen hierzu verzichtet werden kann. In dem in Figur 10 gezeigten Ausführungsbeispiel ist für jede Phase oder für jeden Hochspannungsanschluss 8 der Vorrichtung 1 ein STATCOM 45 vorgesehen. In der Regel sind somit drei STATCOMs 45 erforderlich, die wie in Figur 10 angedeutet, in einer Dreiecksschaltung miteinander verbunden sind.

## Patentansprüche

1. Vorrichtung (1) zur Blindleistungskompensation in einem wenigstens einen Phasenleiter (16,18,19) aufweisenden Hochspannungsnetz (17) mit wenigstens einem Hochspannungsanschluss (8), der zur Verbindung mit dem Phasenleiter (16) eingerichtet ist, wobei für jeden Hochspannungsanschluss (8)
- ein erster und ein zweiter Kernabschnitt (3,4) die Teil eines geschlossenen Magnetkreises sind,
- eine erste Hochspannungswicklung (5), die den ersten Kernabschnitt (3) umschließt, und
- eine zweite Hochspannungswicklung (6), die den zweiten Kernabschnitt (4) umschließt und parallel zur ersten Hochspannungswicklung (15) geschaltet ist,
- wenigstens ein Sättigungsschaltzweig (10,11), der zum Sättigen der Kernabschnitte (3,4) eingerichtet ist und ansteuerbare Leistungshalbleiterschalter (20,21,22,23) aufweist, und
- eine Steuerungseinheit (26) zum Ansteuern der Leistungshalbleiterschalter (20,21,22,23) vorgesehen sind,
wobei die erste und die zweite Hochspannungswicklung (5,6) mit ihrem Hochspannungsende (7) mit dem zugeordneten Hochspannungsanschluss (8) verbunden und an ihrer Niederspannungsseite (9) mit einem oder dem Sättigungsschaltzweig (10,11) verbindbar sind,
**gekennzeichnet durch**
Zusatzwicklungen (36), die induktiv mit den Hochspannungswicklungen (5,6) gekoppelt sind, wobei die Zusatzwicklungen (36) mit wenigstens einem kapazitiv wirkenden Bauteil (35,45) verschaltet sind, wobei das kapazitiv wirkende Bauteil einen statischen Blindleistungskompensator (45) aufweist, der für jeden Hochspannungsanschluss (8) eine Reihenschaltung aus zweipoligen Submodulen (2) ausbildet, wobei jedes Submodul (12) eine Vollbrückenschaltung aus Leistungshalbleiterschaltern (20,21,22,23) und einem Kondensator ausbildet.

2. Vorrichtung (1) nach Anspruch 1,
**dadurch gekennzeichnet, dass** jede Zusatzwicklung (36) zwei Teilzusatzwicklungen (37,38) aufweist und jede Hochspannungswicklung (35) induktiv mit einer Teilzusatzwicklung (37,38) gekoppelt ist, wobei die Teilzusatzwicklungen (37,38) in Reihe oder parallel zueinander geschaltet sind.

3. Vorrichtung (1) nach Anspruch 1 oder 2,
**dadurch gekennzeichnet, dass** das kapazitiv wirkende Bauteil (36,45) Kondensatoren (35) aufweist, wobei die Zusatzwicklungen (36) eine Dreiecksschaltung ausbilden und jeder Zusatzwicklung (36) ein Kondensator (35) parallel geschaltet ist.

4. Vorrichtung (1) nach Anspruch 1 oder 2,
**dadurch gekennzeichnet, dass** das kapazitiv wirkende Bauteil Kondensatoren (35) aufweist, wobei die Zusatzwicklungen (36) eine Dreiecksschaltung ausbilden und der Potenzialpunkt zwischen zwei Zusatzwicklungen (36) mit einem Pol eines Kondensators (35) verbunden ist.

5. Vorrichtung (1) nach Anspruch 1 oder 2,
**dadurch gekennzeichnet, dass** das kapazitiv wirkende Bauteil Kondensatoren (35) aufweist, wobei die Zusatzwicklungen (36) eine Dreiecksschaltung ausbilden und jeder Potenzialpunkt zwischen zwei Zusatzwicklungen (36) über einen Kondensator (35) mit einem Kondensatorsternpunkt (42) verbunden ist.

6. Vorrichtung (1) nach Anspruch 1 oder 2,
**dadurch gekennzeichnet, dass** das kapazitiv wirkende Bauteil Kondensatoren (35) aufweist, wobei die Zusatzwicklungen (36) miteinander unter Ausbildung eines Zusatzwicklungssternpunktes (43) verbunden sind und an ihrer von dem Zusatzwicklungssternpunkt (43) abgewandten Seite mit einem Pol eines Kondensators (35) verbunden sind.

7. Vorrichtung (1) nach Anspruch 1 oder 2,
**dadurch gekennzeichnet, dass** das kapazitiv wirkende Bauteil Kondensatoren (35) aufweist, wobei die Zusatzwicklungen (36) miteinander unter Ausbildung eines Zusatzwicklungssternpunktes (43) verschaltet sind und an ihrer von dem Zusatzwicklungssternpunkt (43) abgewandten Seite miteinander über einen Kondensator (35) verbunden sind.

8. Vorrichtung (1) nach einem der Ansprüche 1 bis 5,
**dadurch gekennzeichnet, dass** die Zusatzwicklungen (36) als Ausgleichswicklungen dienen.

9. Vorrichtung (1) nach einem der vorhergehenden Ansprüche,
**dadurch gekennzeichnet, dass** jedes Submodul (12) einen ersten Reihenschaltungszweig (33) und einen zweiten Reihenschaltungszeig (34) aufweist, die dem Kondensator jeweils parallel geschaltet sind, jeder Reihenschaltungszweig (33,34) eine Reihenschaltung aus Leistungshalbleiterschaltern (20,21,22,23) aufweist, wobei der Potenzialpunkt zwischen den Leistungshalbleiterschaltern (20,21) des ersten Reihenschaltungszweigs (33) mit einer ersten Anschlussklemme (13) des Submoduls (12) und der Potenzialpunkt zwischen den Leistungshalbleiterschaltern (22,23) des zweiten Reihenschaltungszweiges (34) mit der zweiten Anschlussklemme (14) des Submoduls (12) verbunden ist.

10. Vorrichtung (1) nach einem der vorhergehenden Ansprüche,
**dadurch gekennzeichnet, dass** die Zusatzwicklungen (36) eine Dreiecksschaltung ausbilden, wobei jeder Potenzialpunkt zwischen zwei Zusatzwicklungen (36) mit der Reihenschaltung aus zweipoligen Submodulen (12) verbunden ist.

## Claims

1. Device (1) for reactive power compensation in a high-voltage grid (17) comprising at least one phase conductor (16, 18, 19) having at least one high-voltage terminal (8), which is designed for connection with the phase conductor (16), wherein, for each high-voltage terminal (8)
- a first and a second core section (3, 4), which are elements of a closed magnetic circuit,
- a first high-voltage winding (5), which encloses the first core section (3), and
- a second high-voltage winding (6), which encloses the second core section (4) and is connected in parallel with the first high-voltage winding (15),
- at least one saturation switching branch (10, 11), which is designed for the saturation of the core sections (3, 4) and comprises actuatable power semiconductor switches (20, 21, 22, 23), and
- a control unit (26) for the actuation of the power semiconductor switches (20, 21, 22, 23) are provided,
wherein the first and the second high-voltage windings (5, 6), at their high-voltage end (7), are connected to the associated high-voltage terminal (8) and, on their low-voltage side (9), are connectable to a or the saturation switching branch (10, 11),
**characterized by**
auxiliary windings (36), which are inductively coupled to the high-voltage windings (5, 6), wherein the auxiliary windings (36) are interconnected with at least one capacitively acting component (35, 45), wherein the capacitively acting component incorporates a static reactive power compensator (45) which, for each high-voltage terminal (8), comprises a series-connected arrangement of two-pole submodules (2), wherein each submodule (12) constitutes a full-bridge circuit of power semiconductor switches (20, 21, 22, 23) and a capacitor.

2. Device (1) according to Claim 1,
**characterized in that**
each auxiliary winding (36) comprises two auxiliary part-windings (37, 38) and each high-voltage winding (35) is inductively coupled to one auxiliary part-winding (37, 38), wherein the auxiliary part-windings (37, 38) are connected to one another in series or in parallel.

3. Device (1) according to Claim 1 or 2,
**characterized in that**
the capacitively acting component (36, 45) incorporates capacitors (35), wherein the auxiliary windings (36) constitute a delta-connected arrangement, and a capacitor (35) is connected in parallel with each auxiliary winding (36).

4. Device (1) according to one of Claims 1 or 2,
**characterized in that**
the capacitively acting component incorporates capacitors (35), wherein the auxiliary windings (36) constitute a delta-connected arrangement, and the potential point between two auxiliary windings (36) is connected to one pole of a capacitor (35).

5. Device (1) according to one of Claims 1 or 2,
**characterized in that**
the capacitively acting component incorporates capacitors (35), wherein the auxiliary windings (36) constitute a delta-connected arrangement, and each potential point between two auxiliary windings (36) is connected via a capacitor (35) to a capacitor neutral point (42).

6. Device (1) according to one of Claims 1 or 2,
**characterized in that**
the capacitively acting component incorporates capacitors (35), wherein the auxiliary windings (36) are connected to one another to constitute an auxiliary winding neutral point (43) and, at the side thereof which is averted from the auxiliary winding neutral point (43), are connected to one pole of a capacitor (35) .

7. Device (1) according to one of Claims 1 or 2,
**characterized in that**
the capacitively acting component incorporates capacitors (35), wherein the auxiliary windings (36) are mutually interconnected to constitute an auxiliary winding neutral point (43) and, at their side thereof which is averted from the auxiliary winding neutral point (43), are connected to one another via a capacitor (35) .

8. Device (1) according to one of Claims 1 to 5,
**characterized in that**
the auxiliary windings (36) function as compensating windings.

9. Device (1) according to one of the preceding claims,
**characterized in that**
each submodule (12) comprises a first series-connected branch (33) and a second series-connected branch (34), which are respectively parallel-connected to the capacitor, each series-connected branch (33, 34) comprises a series-connected arrangement of power semiconductor switches (20, 21, 22, 23), wherein the potential point between the power semiconductor switches (20, 21) of the first series-connected branch (33) is connected to a first terminal (13) of the submodule (12), and the potential point between the power semiconductor switches (22, 23) of the second series-connected branch (34) is connected to the second terminal (14) of the submodule (12).

10. Device (1) according to one of the preceding claims,
**characterized in that**
the auxiliary windings (36) constitute a delta-connected arrangement, wherein each potential point between two auxiliary windings (36) is connected to the series-connected arrangement of two-pole submodules (12).

## Revendications

1. Montage (1) de compensation de la puissance réactive dans un réseau (17) en haute tension comportant au moins un conducteur (16, 18, 19) de phase, comprenant au moins une borne (8) de haute tension, qui est agencée pour la connexion avec le conducteur (16) de phase, dans lequel pour chaque borne (8) de haute tension, il est prévu
- un premier et un deuxième tronçon (3, 4) de noyau, qui font partie d'un circuit magnétique fermé,
- un premier enroulement (5) de haute tension, qui entoure le premier tronçon (3) de noyau, et
- un deuxième enroulement (6) de haute tension, qui entoure le deuxième tronçon (4) de noyau et qui est monté en parallèle avec le premier enroulement (15) de haute tension,
- au moins une branche (10, 11) de saturation, qui est agencée pour la saturation des tronçons (3, 4) de noyau et qui a des interrupteurs (20, 21, 22, 23) à semiconducteur de puissance pouvant être commandés, et
- une unité (26) de commande pour la commande des interrupteurs (20, 21, 22, 23) à semiconducteur de puissance,
dans lequel le premier et le deuxième enroulement (5, 6) de haute tension sont connectés par leur extrémité (7) de haute tension à la borne (8) de haute tension affectée et peuvent être connectés à leur côté (9) de basse tension à une ou à la branche (10, 11) de saturation,
**caractérisé par**
des enroulements (36) supplémentaires, qui sont couplés par induction avec les enroulements (5, 6) de haute tension, dans lequel les enroulements (36) supplémentaires sont connectés à au moins un composant (35, 45) à effet capacitif, dans lequel le composant à effet capacitif a un compensateur (45) statique de puissance réactive, qui est constitué pour chaque borne (8) de haute tension d'un circuit série composé de deux sous-modules (2) bipolaires, dans lequel chaque sous-module (12) forme un circuit en pont complet composé d'interrupteurs (20, 21, 22, 23) à semiconducteur de puissance et d'un condensateur.

2. Montage (1) suivant la revendication 1,
**caractérisé en ce que**
chaque enroulement (36) supplémentaire a deux enroulements (37, 38) partiels supplémentaires et chaque enroulement (35) de haute tension est couplé par induction avec un enroulement (37, 38) partiel supplémentaire, les enroulements (37, 38) supplémentaires étant montés entre eux en série ou en parallèle.

3. Montage (1) suivant la revendication 1 ou 2,
**caractérisé en ce que**
le composant (36, 45) à effet capacitif a des condensateurs (35), dans lequel les enroulements (36) supplémentaires forment un circuit en triangle et un condensateur (35) est monté en parallèle avec chaque enroulement (36) supplémentaire.

4. Montage (1) suivant la revendication 1 ou 2,
**caractérisé en ce que**
le composant à effet capacitif a des condensateurs (35), dans lequel les enroulements (36) supplémentaires forment un circuit en triangle et le point de potentiel entre deux enroulements (36) supplémentaires est connecté à un pôle d'un condensateur (35) .

5. Montage (1) suivant la revendication 1 ou 2,
**caractérisé en ce que**
le composant à effet capacitif a des condensateurs (35), dans lequel les enroulements (36) supplémentaires forment un circuit en triangle et chaque point de potentiel entre deux enroulements (36) supplémentaires est connecté à un point (42) neutre de condensateur par un condensateur (35).

6. Montage (1) suivant la revendication 1 ou 2,
**caractérisé en ce que**
le composant à effet capacitif a des condensateurs (35), dans lequel les enroulements (36) supplémentaires sont connectés entre eux avec formation d'un point (43) neutre d'enroulement supplémentaire et sont de leur côté, non tourné vers le point (43) neutre d'enroulement supplémentaire, connectés à un pôle d'un condensateur (35).

7. Montage (1) suivant la revendication 1 ou 2,
**caractérisé en ce que**
le composant à effet capacitif a des condensateurs (35), dans lequel les enroulements (36) supplémentaires sont connectés entre eux avec formation d'un point (43) neutre d'enroulement supplémentaire et sont, de leur côté éloigné du point (43) neutre d'enroulement supplémentaire, connectés entre eux par un condensateur (35).

8. Montage (1) suivant l'une des revendications 1 à 5,
**caractérisé en ce que**
les enroulements (36) supplémentaires servent d'enroulements de compensation.

9. Montage (1) suivant l'une des revendications précédentes, **caractérisé en ce que**
chaque sous-module (12) a une première branche (33) de circuit série et une deuxième branche (34) de circuit série, qui sont montées chacune en parallèle avec le condensateur, chaque branche (33, 34) de circuit série a un circuit série composé d'interrupteurs (20, 21, 22, 23) à semiconducteur de puissance, dans lequel le point de potentiel entre les interrupteurs (20, 21) à semiconducteur de puissance de la première branche (33) de circuit série est connecté à une première borne (13) du sous-module (12) et le point de potentiel entre les interrupteurs (22, 23) à semiconducteur de puissance de la deuxième branche (34) de circuit série est connecté à la deuxième borne (14) du sous-module (12).

10. Montage (1) suivant l'une des revendications précédentes, **caractérisé en ce que**
les enroulements (36) supplémentaires forment un circuit en triangle, dans lequel chaque point de potentiel entre deux enroulements (36) supplémentaires est connecté au circuit série composé de sous-modules (12) bipolaires.
